## Europäisches Patentamt
## European Patent Office
## Office européen des brevets

(19)

(11) Veröffentlichungsnummer: **0 111 767**

**B1**

(12) # EUROPÄISCHE PATENTSCHRIFT

(45) Veröffentlichungstag der Patentschrift:
25.11.87

(51) Int. Cl.⁴: **C 09 K 3/18 //**
**C09K17/00**

(21) Anmeldenummer: 83111559.7

(22) Anmeldetag: 18.11.83

(54) **Verfahren zur Verhinderung und Reduzierung von durch Salze mitverursachten Schäden an Bauwerken oder Kulturdenkmälern.**

(30) Priorität: 18.11.82 SE 8206573
18.11.82 SE 8206574
18.11.82 SE 8206575
18.11.82 SE 8206577
12.08.83 SE 8304546
12.08.83 SE 8304547

(43) Veröffentlichungstag der Anmeldung:
27.06.84 Patentblatt 84/26

(45) Bekanntmachung des Hinweises auf die Patenterteilung:
25.11.87 Patentblatt 87/48

(84) Benannte Vertragsstaaten:
**AT BE CH DE FR GB IT LI LU NL SE**

(56) Entgegenhaltungen:
EP-A-0 077 767
DE-A-2 062 284
DE-A-3 142 059
US-A-2 233 185
US-A-4 254 166

J.L. MOILLIET: "Waterproofing and water-repellency", Elsevier, Amsterdam, NL, 1963, Seiten 1-23, Kapitel 1, N.K.ADAM: "Principles of water-repellency"
J.L. MOILLIET: "Waterproofing and water-repellency", Elsevier, Amsterdam, NL, 1963, Seiten 339-383; Kapitel 12, A.S.MICHAELS: "The

(73) Patentinhaber: **PÜHRINGER, Josef, Dr.,**
**Björnkällevägen 35, S-183 64 Täby/Stockholm (SE)**

(72) Erfinder: **PÜHRINGER, Josef, Dr., Björnkällevägen 35, S-183 64 Täby/Stockholm (SE)**

(74) Vertreter: **Kinzebach, Werner, Dr., Patentanwälte Reitstötter, Kinzebach und Partner Sternwartstrasse 4 Postfach 86 06 49, D-8000 München 86 (DE)**

(56) Entgegenhaltungen: (Fortsetzung)
**waterproofing of soils and building materials"**

EP 0 111 767 B1

## Beschreibung

Die Erfindung betrifft ein Verfahren zur Verhinderung von Salzwanderungsprozessen und von durch Salze mitverursachten Sprengungs- und Zerstörungsprozessen bei Bauwerken oder Kulturdenkmälern.

Bekanntlich wird die Verwitterung von Bauwerken, Baumaterialien usw. durch wasserlösliche Salze, Feuchtigkeit und gegebenenfalls andere umweltschädliche Stoffe wesentlich beeinflußt. Zu den schädlichen Salzen gehören beispielsweise: Alkali-, Erdalkali- und Ammonium-nitrate, -sulfate, -chloride und -carbonate mit und ohne Kristallwasser.

So verwittern vorwiegend mineralische und poröse Baumaterialien wesentlich schneller, wenn sich Salze in die Poren dieser Materialien einlagern und beim wiederholten Wechsel zwischen feucht und trocken verschiedene Kristallisate bilden. Auch die Einlagerung von Feuchtigkeit oder Wasser in derartige poröse Materialien führt zu einer starken Verwitterung, denn das eingelagerte Wasser friert bei Frost und sprengt das entsprechende Material. Schließlich verursacht auch der Einsatz von Tau- bzw. Streusalzen auf Straßen erhebliche Schäden an diesen und an den umliegenden Gebäuden.

Streusalze dienen dazu, den Gefrierpunkt von Wasser zu senken und somit eine Eisbildung auf Straßen zu verhindern. Aus wirtschaftlichen Gründen werden hauptsächlich Alkali- und Erdalkalichloride eingesetzt.

Es sind bereits verschiedene gefrierpunktserniedrigende Mittel bekannt, die neben üblichen Streusalzen auch andere Bestandteile enthalten und außerdem eine korrosionsinhibierende Wirkung besitzen.

In der DE-A-20 62 284 ist eine korrosionsinhibierende Mischung aus einem wasserlöslichem Polyphosphat oder einer Mischung von Polyphosphaten und bestimmten oberflächenaktiven Mitteln beschrieben, die zusammen mit Natriumchlorid oder Calciumchlorid zur Behandlung von Straßenoberflächen eingesetzt werden kann.

Weitere gefrierpunktserniedrigende Zusammensetzungen sind in folgenden Druckschriften beschrieben: US-A-2 233 185, US-A-4 254 166 und DE-A-31 42 056 sowie in der EP-A-77 767, wobei der Inhalt letzterer Druckschrift nur hinsichtlich Art. 54 (3) EPÜ zum Stand der Technik zählt.

Es wurden auch schon Harnsäuresalze als Streusalze eingesetzt, insbesondere für Rollbahnen auf Flughäfen, da derartige Salze einen geringeren Rostfraß verursachen.

Auf manche Verkehrsflächen werden nicht nur im Winter, sondern auch im Sommer Salze gestreut, um Straßenstaub zu binden.

Dringen derartige Salze in die Poren von Bauwerken, Straßen und Kulturdenkmälern ein, dann verursachen sie die oben genannten Schäden.

Es ist bis heute noch ungeklärt, welcher Mechanismus zu einer Schädigung bzw. Zerstörung der Bauwerke führt. Eine mögliche Erklärung ist folgende:

Das in Wasser gelöste Salz wird zusammen mit diesem aufgrund von Kapillarkräften in die Poren eines Bauwerks transportiert. Verdampft das Wasser, dann bilden sich Salzkristalle. Diese Salzkristalle sind hygroskopisch und lagern Wasser unter Volumenvergrößerung an. Diese Volumenvergrößerung sprengt die Porenstruktur. Wiederholt sich dieser Vorgang, dann führt das zu einer starken Verwitterung des Bauwerks.

Man hat nun festgestellt, daß durch Feuchtigkeit und Salze verursachte Schäden nicht nur an den Außenflächen von Bauwerken, sondern auch in den Fundamenten auftreten können. Dies wurde insbesondere an sehr alten historischen Bauten festgestellt, obwohl auch einige moderne Bauten bereits derartige Schäden aufweisen.

Man erklärt sich dieses Phänomen wie folgt. Feuchtigkeit, beispielsweise Grundwasser, wird von dem Fundament aus dem angrenzenden Boden aufgesaugt. In einer gewissen Höhe - in den meisten Fällen im Kontakt mit einer wärmeren Umwelt - verdunstet das Wasser und weiteres Wasser wird aufgrund osmotischer Kräfte vom Boden hochgesaugt. Dabei nimmt das Wasser Salze aus dem Boden, aus der Mauer und anderen Teilen auf. In der Verdunstungszone bzw. Verdunstungsstelle lagern sich Salze ab und verursachen die oben genannten Schäden.

Es wurden nun verschiedene Maßnahmen zur Verhinderung von derartigen Schäden vorgeschlagen. Insbesondere hat man versucht, die Außenflächen und auch die weiter innen liegenden Teile von Bauwerken hydrophob zu machen. Man glaubte dadurch die Kapillaren "blockieren" und somit einen Transport des Wassers und der darin gelösten Salze ins Innere der Bauwerke verhindern zu können.

Es wurde nun überraschend gefunden, daß nicht nur Kapillarkräfte für den Transport von Wasser und den darin gelösten Salzen verantwortlich sind. Vielmehr wird die Wanderung von Wasser und den darin gelösten Salzen in einer porösen Struktur durch die Änderungen der Luftfeuchtigkeit verursacht. Dabei spielt der Feuchtigkeitsgehalt in der Luft über einer mit einer wasserlöslichen Verbindung gesättigten, einen Überschuß dieser Verbindung enthaltenden Lösung (Sättigungsfeuchtigkeitsgehalt) eine wesentliche Rolle. Bekanntlich ist der Sättigungsfeuchtigkeitsgehalt in der Luft über einer wäßrigen, Salze enthaltenden Lösung niedriger als bei reinem Wasser. Die Luft über reinem Wasser besitzt somit einen höheren Sättigungsfeuchtigkeitsgehalt als eine wäßrige Salzlösung.

Ändert sich nun die Temperatur, dann wird in der Luft, die sich über einer wäßrigen Salzlösung befindet, der Taupunkt bei einer anderen Temperatur erreicht, als das bei reinem Wasser der Fall ist. Taupunktsdurchgänge verursachen daher Kondensations-, Osmose- und Auskristallisierungsphänomene, deren ständiger Wechsel die Schäden bewirkt.

Es bilden sich dabei in den Poren Salzablagerungen mit äußerst großen Oberflächen. Diese Salze sind äußerst hygroskopisch. Beim Anfeuchten dieser hygroskopischen Salzstrukturen, d.h. bei Taupunktdurchgängen, treten Umstrukturierungen dieser Salzstrukturen auf, die, wenn sich dieser Vorgang wiederholt (mehrfaches Austrocknen und Wiederanfeuchten) zu Schubspannungen und zu einer Zerstörung des porösen Materials führt. Im äußeren Fall wird das Bauwerk völlig zerstört.

Der Feuchtigkeitsgehalt der Luft in dem an die Salzformationen bzw. Salzstrukturen angrenzenden Raum beeinflußt somit die Zerstörung des Materials wesentlich.

Die Umstrukturierung und Umkristallisierung der Salzstrukturen und die damit verbundene Zerstörung des Materials hängt aber auch von der Oberflächenspannung oder Grenzflächenspannung des Wasser bzw. der wäßrigen Salzlösung ab.

Aufgabe der Erfindung ist es, in dem Raum, der an Salzstrukturen bzw. Salzformationen angrenzt, stabile Feuchtigkeitsverhältnisse zu schaffen. Derartige stabile Feuchtigkeitsverhältnisse sollen entweder direkt in dem an die Salzstrukturen angrenzenden Raum, auf der Materialoberfläche des Grundmaterials und/oder der Salzstruktur und/oder in den Poren bzw. Kapillaren der Oberflächenschicht erreicht werden.

Diese Aufgabe wird erfindungsgemäß durch ein Verfahren gelöst, das dadurch gekennzeichnet ist, daß man Bauwerke oder Kulturdenkmäler mit einer wasserlöslichen Verbindung behandelt, die zu einem Sättigungsfeuchtigkeitsgehalt der Luft über einer mit dieser Verbindung gesättigten, wäßrigen Lösung führt, welcher sich von dem Sättigungsfeuchtigkeitsgehalt in der Luft über einer mit dem schädlichen Salz gesättigten, wäßrigen Lösung um 5 bis 60 %-Punkte relative Luftfeuchtigkeit gemessen bei 20° C unterscheidet und/oder mit einer grenzflächenaktiven wasserlöslichen Verbindung behandelt, welche die Oberflächenspannung von Wasser oder wäßrigen Salzlösungen senkt oder die Grenzflächenspannung von Wasser oder wäßrigen Salzlösungen erhöht.

Unter dem Ausdruck "Sättigungsfeuchtigkeitsgehalt" wird im Rahmen der folgenden Anmeldung folgendes verstanden. Eine wäßrige, mit einer Verbindung gesättigte Lösung führt bei einer bestimmten Temperatur in der Luft über dieser Lösung zu einem bestimmten Feuchtigkeitsgehalt, der in dieser Anmeldung auf eine Temperatur von 20° C bezogen ist und mit Sättigungsfeuchtigkeitsgehalt bezeichnet wird. Der Sättigungsfeuchtigkeitsgehalt variiert je nach der in der wäßrigen Lösung gelösten Verbindung.

Nach dem erfindungsgemäßen Verfahren werden solche Verbindungen eingesetzt, die einen Sättigungsfeuchtigkeitsgehalt hervorrufen, der entweder niedriger oder höher ist als der entsprechende Sättigungsfeuchtigkeitsgehalt der schädlichen Salze.

Bei den erfindungsgemäß eingesetzten Verbindungen ist der Sättigungsfeuchtigkeitsgehalt geringer als 100 % r. L., d.h. der Taupunkt über Lösungen dieser Stoffe differiert von dem Taupunkt über reinem Wasser (r.L. = relative Luftfeuchtigkeit).

Eine Senkung des Sättigungsfeuchtigkeitsgehalts kann man auch dadurch erreichen, daß man die erfindungsgemäß eingesetzten Verbindungen als wäßrige Emulsionen oder Suspensionen verwendet. Die Feuchtigkeitsgehaltsänderungen sind dabei umso größer, je kleiner die Partikel in der Suspension/Emulsion sind.

Der Sättigungsfeuchtigkeitsgehalt liegt bei den meisten Verbindungen zwischen ca. 50-75 % und ca. 90-95 % r.L. So führen z.B. Natriumsulfat und andere Sulfate zu einem Sättigungsfeuchtigkeitsgehalt von etwa 90 % r.L. und Natriumchlorid zu einem Feuchtigkeitsgehalt von etwa 75 % r.L. (der Sättigungsfeuchtigkeitsgehalt ist temperaturabhängig, die angegebenen Werte gelten für 20° C). Die zuerst genannten Salze können Kristallwasser anlagern, die Zweitgenannten jedoch nicht.

Die erfindungsgemäß eingesetzten Verbindungen sind wasserlöslich und hygroskopisch. Sie adsorbieren Feuchtigkeit auch bei weniger als 100 % r.L. und neigen dazu, in Lösung zu gehen. Vorzugsweise verwendet man Verbindungen, deren Sättigungsfeuchtigkeitsgehalt zwischen 95 % und 25 % r.L. beträgt. Erfindungsgemäß können Verbindungen, die zu einem Sättigungsfeuchtigkeitsbereich in dem genannten Intervall führen, eingesetzt werden, um entweder den Sättigungsfeuchtigkeitsgehalt in dem an die Salze oder Salzlösungen angrenzenden Raum zu erhöhen oder zu erniedrigen.

Erfindungsgemäß werden Verbindungen eingesetzt, die zu einem Sättigungsfeuchtigkeitsgehalt führen, der sich um 5-60 Prozenteinheiten (%-Punkte) relative Luftfeuchtigkeit, vorzugsweise um mindestens 5-20 %-Punkte und insbesondere um mindestens 10-15 %-Punkte von dem Sättigungsfeuchtigkeitsgehalt des schädlichen Salzes unterscheidet.

Erfindungsgemäß können viele anorganische Salze mit und ohne Kristallwasser, die den oben genannten Bedingungen entsprechen, eingesetzt werden. Geeignete Salze sind beispielsweise Alkali- und Erdalkali-phosphate und -phosphite (z.B. Natriumhypophosphit) sowie -nitrite (z.B. Kaliumnitrit). Vorzugsweise werden solche Salze verwendet, deren Hydratwassergehalt sich bei Taupunktsdurchgängen nicht ändert.

Mischungen aus verschiedenen Salzen führen häufig zu einem Sättigungsfeuchtigkeitsgehalt, der sich erheblich von dem der einzelnen Salze unterscheidet. So beträgt der Sättigungsfeuchtigkeitsgehalt von K $ClO_3$ = 95 % und von NaCl = 74 % relative Luftfeuchtigkeit. Der Sättigungsfeuchtigkeitsgehalt einer Mischung dieser Salze beträgt aber 36 % r.L. Erfindungsgemäß können somit auch Mischungen aus einem schädlichen Salz und einem anderen Salz eingesetzt werden, um die durch das schädliche Salz hervorgerufenen Schäden zu verhindern.

Vorzugsweise verwendet man aber organische Salze, beispielsweise wasserlösliche Salze von organischen Säuren, z.B. Salze von Ameisensäure, Essigsäure, Propionsäure, Buttersäure, Citronensäure, Valeriansäure und deren Isomere. Auch Salze höherer Fettsäuren, d.h. Säuren mit sechs oder mehr Kohlenstoffatomen, können eingesetzt werden, sofern diese wasserlöslich oder mit Wasser mischbar sind. Zu den bevorzugten Salzen gehören die Alkali- und Erdalkalimetallsalze. Die oben genannten Salze werden vorzugsweise eingesetzt, um den Sättigungsfeuchtigkeitsgehalt unter den durch das schädliche Salz hervorgerufenen Sättigungsfeuchtigkeitsgehalt zu senken.

Erfindungsgemäß einsetzbare Verbindungen, welche den Sättigungsfeuchtigkeitsgehalt so ändern, daß er über dem Sättigungsgehalt liegt, der durch das schädliche Salz hervorgerufen wird, sind wasserlösliche Kohlenhydrate, beispielsweise einfache Zucker (Monosaccharide und Disaccharide) und auch Hexosen und Pentosen. So kann man beispielsweise Glukose und deren Stereoisomere einsetzen, z.B. Manose, Fructose, Arabinose, Xylose, Ribose und Galactose. Als einsetzbare Disaccharide kann man Saccharose, Maltose, Cellubiose und Lactose nennen.

Erfindungsgemäß können auch Polysaccharide, beispielsweise Cellulose und Stärke, eingesetzt werden.

Der durch diese Verbindungen hervorgerufene Sättigungsfeuchtigkeitsgehalt beträgt 80-95 % r.L.

Durch das beschriebene, erfindungsgemäße Verfahren ist es möglich, sogenannte Salzwanderungs-, Salzsprengungs- und Salzzerstörungsprozesse zu verhindern oder jedenfalls erheblich zu reduzieren.

Die Wanderung der schädlichen Salze wird nun nicht nur durch die Änderung des Sättigungsfeuchtigkeitsgehaltes sondern auch durch die Form und Eigenschaften des wäßrigen Filmes beeinflußt, in dem die schädlichen Salze gelöst sind und der in die Poren der zu schützenden Bauwerke eindringt. Dabei spielt insbesondere die Dicke dieses Filmes (und dessen Meniskusabschluß) eine Rolle, die wiederum abhängig ist von der Oberflächenspannung des Filmes und dessen Grenzflächenspannung gegenüber dem angrenzenden Material.

In dem erfindungsgemäßen Verfahren zur Verhinderung und Reduzierung von durch Salze mitverursachten Schäden können auch grenzflächenaktive Verbindungen eingesetzt werden, die die Oberflächenspannung von Wasser oder wäßrigen Salzlösungen senken. Es handelt sich dabei um Tenside. Durch den Einsatz dieser Tenside können die Wanderung der Salze und die durch diese Salze hervorgerufenen Schäden verhindert oder zumindest reduziert werden.

Erfindungsgemäß können kationische, anionische und nicht-ionische Tenside, vorzugsweise nicht-ionische Tenside eingesetzt werden. Als nicht-ionische Tenside werden vorzugsweise solche eingesetzt, die in niedrigen Alkoholen oder Wasser lösbar oder damit mischbar sind.

Beispiele für anionische Tenside sind: Sulfonierte und sulfurierte Ester, Amine und Polyäther, sulfonierte und sulfurierte Fette, Öle und Fettsäuren, Reaktionsprodukte von Fettsäuren mit binären, tertiären und quaternären organischen Aminen und Seifen unterschiedlicher Art. Bevorzugte nicht-ionische Tenside sind Alkohol-Alkylenoxidaddukte, Ester und Äther. Beispielsweise kann man nennen: Sorbitanfettsäureester, Polyoxyethylensorbitanfettsäureester, Polyoxyethylenfettsäureester und Polyoxyethylenfettalkoholäther, Polyoxyethylenaddukte, Alkylphenolethylenoxidaddukte, Fettsäureethylenoxidaddukte, Alkylglyceryletylenoxidaddukte, Fettalkoholetoxilete, alkoxylierte Alkylphenole und dgl.

Brauchbare Handelsprodukte dieser Art sind unter anderem: Polyoxyethylenstearat, Sorbitanmonooleat, Sorbitanmonopalmitat, Sorbitanmonostearat, Sorbitantristearat, Sorbitanmonooleat, Sorbitantrioleat, Polyoxyethoxysorbitanmonooleat, -monopalmitat, -monostearat, -tristearat, -trioleat usw.

In dem erfindungsgemäßen Verfahren können auch Verbindungen eingesetzt werden, die sowohl die Oberflächenspannung von Wasser vermindern (Tenside) als auch zu einem Sättigungsfeuchtigkeitsgehalt führen, der sich von dem Sättigungsfeuchtigkeitsgehalt von reinem Wasser unterscheidet. Beispiele für derartige, wasserlösliche Verbindungen, die einerseits den Sättigungsfeuchtigkeitsgehalt ändern und andererseits oberflächenaktive Mittel darstellen, sind Polyphosphate, beispielsweise Natriumtripolyphosphat.

Die Tenside können auch - wie bereits oben ausgeführt - alleine eingesetzt werden, insbesondere zum Schutz von Bauwerken. Diese Tenside schützen die genannten Konstruktionen vor den Schäden, die durch Feuchtigkeit, Salze und Frost verursacht werden. Erfindungsgemäß werden vorzugsweise solche Tenside eingesetzt, welche die Oberflächenspannung von Wasser, die normalerweise etwa 70 Dyn/cm beträgt, auf 20-50 Dyn/cm reduzieren.

Es konnte bis jetzt noch nicht theoretisch erklärt werden, aufgrund welchen Mechanismus die eingesetzten Tenside zu einer Verhinderung bzw. Reduzierung von Schäden führen, die durch Salze und Feuchtigkeit verursacht werden. Die Tatsache, daß der Zusatz von oberflächenaktiven Mitteln in Form von Tensiden die Oberflächenspannung von Wasser oder wäßrigen Salzlösungen herabsetzt und somit die Kapillarkräfte verringert, so daß wäßrige Lösungen von schädlichen Salzen nicht so tief in die Poren der zu schützenden Bauwerke eindringen können, erklärt dieses Phänomen nur teilweise.

Neuere Forschungsarbeiten haben gezeigt, daß die eingesetzten Tenside die Eigenschaften von Lösungsfilmen ändern und die Strukturveränderungen der Salze bei Änderungen der relativen Feuchtigkeit beeinflussen. Dies führt zu einem veränderten Kristallisationsverhalten der eingedrungenen schädlichen Salze, so daß Salzsprengungen verhindert werden. Eine exakte theoretische Erklärung konnte jedoch noch nicht gefunden werden.

Erfindungsgemäß können die Wanderung oder der Transport von Salzen oder wäßrigen Salzlösungen und damit die entsprechenden Schäden auch durch Einsatz von Verbindungen verhindert bzw. reduziert werden, die die Grenzflächenspannung von Wasser oder wäßrigen Salzlösungen erhöhen. Es kann sich dabei um bekannte Hydrophobierungspräparate handeln.

Erfindungsgemäß können Wachse, Paraffine, Stearate, Silane, Siloxane, Silikone und Fluorkohlenwasserstoffe eingesetzt werden. Bevorzugt sind Silane, deren Hydrolysate und Hydrolysatkondensate, insbesondere Alkoxysilane, z.B. Alkyl- oder Arylalkoxysilane, oder Phenoxysilane. Die bevorzugten Alkoxysilane sind Alkyltrialkoxysilane.

Die Alkylgruppen der Alkyltrialkoxysilane können gerade oder verzweigt sein und enthalten 1 bis 12 Kohlenstoffatome, vorzugsweise 1 bis 6 Kohlenstoffatome. Beispiele für derartige Alkylgruppen sind: Methyl, Ethyl, Propyl, Isopropyl, Butyl, Isobutyl, tert. Butyl, Pentyl, Isopentyl, Hexyl, Octyl, Isooctyl und Decyl.

Die Alkylgruppen im Alkoxyrest weisen im allgemeinen 1-6 Kohlenstoffatome, vorzugsweise 1-4 Kohlenstoffatome, auf. Beispiele für derartige Gruppen sind: Propyl, Isopropyl, Butyl, Isobutyl und Isopentyl. Am bevorzugtesten sind Methyl- und Ethylgruppen.

Geeignete Arylgruppen sind beispielsweise Phenyl- und Naphthylgruppen, die gegebenenfalls substituiert sein können.

Es können auch Produkte eingesetzt werden, die durch Hydrolyse oder partielle Hydrolyse von Alkoxysilanen oder durch Kondensation von diesen Hydrolyseprodukten erhalten wurden. Von diesen Kondensationsprodukten sind oligomere Silane oder Siloxane mit 2-10 Si-O-Gruppen pro Molekül bevorzugt.

Es wurde ferner überraschend festgestellt, daß Verbindungen, die den Sättigungsfeuchtigkeitsgehalt ändern, erfindungsgemäß auch zusammen mit Verbindungen, welche die Oberflächenspannung ändern und/oder zusammen mit Verbindungen, die die Grenzflächenspannung von Wasser oder einer wäßrigen Lösung ändern, eingesetzt werden können. Durch die Kombination derartiger Verbindungen kann die Wanderung von Salzen und damit die durch Salze im Zusammenhang mit Feuchtigkeit hervorgerufenen Zerstörungen verhindert oder reduziert werden.

Das erfindungsgemäße Verfahren dient einerseits dazu, Bauwerke oder Kulturdenkmäler vor Schäden zu schützen, die durch Salze, die gegebenenfalls mit Wasser oder Feuchtigkeit zusammenwirken, hervorgerufen werden. Das erfindungsgemäße Verfahren kann auch zur Verminderung oder Reduzierung von Feuchtigungs- oder Frostschäden eingesetzt werden. Es handelt sich dabei um eine Art Imprägnierung, um die entsprechenden Bauwerke und Kulturdenkmäler zu schützen.

Das erfindungsgemäße Verfahren kann andererseits aber auch angewendet werden, um bereits geschädigte Bauten zu behandeln. Auf diese Weise wird eine weitere Verwitterung oder Zerstörung von Bauten, in die z.B. bereits schädliche Salze eingedrungen sind, verhindert oder zumindest verlangsamt.

Die zur Durchführung des erfindungsgemäßen Verfahrens eingesetzten Mittel können auch zusammen mit bekannten porenfüllenden Stoffen verwendet werden. Derartige porenfüllende Stoffe sind beispielsweise Kieselsäureester, -silikate (Wasserglas), Epoxide, Urethane, Acrylate usw.

Das erfindungsgemäße Verfahren ist sowohl zum Schutz von porösen, in erster Linie mineralischen Materialien, als auch zum Schutz von massiven Konstruktionen, beispielsweise Eisen- und Stahlkonstruktionen geeignet.

Erfindungsgemäß behandelt man die Oberfläche des bereits geschädigten oder zu imprägnierenden Materials mit mindestens einer der erfindungsgemäß eingesetzten Verbindungen. Diese Verbindungen können entweder in flüssiger oder in fester Form, als Lösungen, Emulsionen, Suspensionen oder Aerosole eingesetzt werden.

Es kann auch erforderlich sein, eine Flüssigkeit als Transportmedium zu verwenden. In diesem Fall können Wasser oder bekannte Lösungs- und Dispersionsmittel zum Einsatz kommen.

Soll Wasser als Transportmedium vermieden werden, insbesondere um Salze nicht unkontrolliert auf den zu behandelnden Bauwerken umzuverteilen, können auch wasserfreie Transportmedien, beispielsweise aliphatische oder aromatische Lösungsmittel eingesetzt werden.

Als aliphatische Lösungsmittel kommen in Betracht: Ein- oder mehrwertige Alkohole, Ketone, Ester und Äther, die vorzugsweise wasserlöslich sind.

Einsetzbare Alkohole sind Methanol, Äthanol, Propanol, Isopropanol, Butanol, Glykol, Propylenglykol, Butylenglykol und Glycerin. Verwendbare Ketone sind beispielsweise Aceton und Methylethylketon. Geeignete Ester sind beispielsweise Essigsäureester mit mehrwertigen Alkoholen, wie Glykol und Glycerin. Zu den einsetzbaren Äthern zählen Ethylenglykolmonoethyläther und Ethylenglykolmonomethyläther. Als aromatische Lösungsmittel können beispielsweise Benzol, Xylol, Toluol, Lacknaphta, Terpentinölersatz u. dgl. eingesetzt werden.

Die oben genannten wasserlöslichen oder mit Wasser mischbaren Transportmedien können gegebenenfalls als solche eingesetzt werden, um den Sättigungsfeuchtigkeitsgehalt oder die Oberflächenspannung bzw. Meniskusform von Wasser oder einer wäßrigen Lösung im Rahmen der vorliegenden Erfinduing zu verändern. Diese Transportmedien stellen somit erfindungsgemäß einsetzbare Verbindungen dar.

Sind bereits schädliche Salze oder deren wäßrige Lösungen in zu behandelnde Bauwerke eingedrungen und wünscht man, daß bei der Durchführung des erfindungsgemäßen Verfahrens eine Umlagerung und weitere Verteilung der schädlichen Salze vermieden wird, dann setzt man als Transportmedium Flüssigkeiten ein, welche wasserlösliche Salze nicht oder nur im geringen Maße lösen. In diesem Fall kann das Transportmedium auch eine Mischung aus Wasser und einer nichtwasserlöslichen Flüssigkeit in Form einer Emulsion sein.

Wünscht man hingegen die bereits eingedrungenen Salze oder deren wäßrige Lösungen weiter zu verteilen, dann verwendet man als Transportmedium hauptsächlich Wasser oder Wassermischungen für die Verteilung der sättigungsfeuchtigkeitsgehaltsändernden Verbindung und/oder oberflächenaktiven Verbindung. Setzt man die Verbindungen, die den Sättigungsfeuchtigkeitsgehalt ändern und/oder die Oberflächenspannung von Wasser senken und/oder die Grenzflächenspannung von Wasser erhöhen, zusammen mit einem gasförmigen oder flüssigen Transportmedium ein, dann kann man auch eine pulverförmige Trägersubstanz verwenden, so daß man eine Mischung aus der Trägersubstanz, dem flüssigen oder gasförmigen Transportmedium und dem im Sinne der vorliegenden Erfindung aktiven Stoff auf eine Fläche eines zu schützenden, porösen, gegebenenfalls salzhaltigen Materials aufbringt. Der Transport in das Porensystem der Oberflächenschicht erfolgt dann durch Kapillarkräfte (Aufsaugen).

Erfindungsgemäß führen auch Mischungen aus einem Tensid (Netzmittel) und einem Hydrophobierungsmittel zu einem überraschend vorteilhaften Effekt.

Die erfindungsgemäß einsetzbaren Verbindungen können, gegebenenfalls zusammen mit einem Transportmedium, durch Tauchen, Rollen, Pinseln, Spritzen, Sprayen usw., gegebenenfalls unter Anwendung von Über- und Unterdruck auf die zu schützenden Bauwerke aufgetragen werden. Die Haftung zwischen einer aktiven Verbindung oder einem diese Verbindung enthaltenden Mittel auf einem Substrat kann physikalisch sein (Partikelabsorption) oder kann durch spezielle haftungsverbessernde Stoffe (Leim) oder durch chemische Reaktion mit dem Substrat erreicht werden.

Zerstören die Verbindungen, die den Sättigungsfeuchtigkeitsgehalt ändern und/oder die Oberflächenspannung verringern (Tenside) die wasserabweisende Wirkung (Verhinderung des Einsaugens von Wasser in die Kapillaren) eines üblichen Hydrophobierungsmittels, dann kann man übliche Hydrophobierungsmittel zusammen mit den anderen erfindungsgemäß einsetzbaren Verbindungen verwenden, um Wanderungen von Salzen und dadurch hervorgerufene Zerstörungen zu verhindern oder zu reduzieren. Erfindungsgemäß werden Verbindungen eingesetzt, die zu einem Sättigungsfeuchtigkeitsgehalt führen, der sich von dem Sättigungsfeuchtigkeitsgehalt der durch die schädlichen Salze hervorgerufen wird, unterscheiden. Es ist aber auch möglich, solche Salze einzusetzen im erfindungsgemäßen Verfahren, deren Sättigungsfeuchtigkeitsgehalt sich nicht unterscheidet. Dadurch wird der Sättigungsfeuchtigkeitsgehalt über den schädlichen Salzen oder deren wäßrigen Lösungen fixiert, so daß Taupunktsdurchgänge nicht vorkommen können. Auch so werden Materialwandungen, Umstrukturierungen und ein Sprengen des Grundmaterials verhindert.

Erfindungsgemäß können nicht nur die inneren oder äußeren Oberflächen von Bauwerken behandelt werden, sondern es ist auch möglich, die erfindungsgemäß eingesetzten Verbindungen in das Material des entsprechenden Bauwerks einzubringen, d.h. zu injizieren.

Eingangs wurde geschildert, daß die Fundamente insbesondere von historischen Bauten häufig durch Salze verursachte Schäden aufweisen, da Wasser aus der Umgebung (gegebenenfalls Grundwasser) vom Fundament aufgesaugt wird und in den Mauern hochsteigt. In einer gewissen Höhe verdunstet das Wasser dann und die Salze lagern sich ab.

Es ist nun möglich, den Kapillartransport des Wassers oder der wäßrigen Salzlösungen zu verhindern oder zu verringern, indem man den durch Kapillarkräfte verursachten Transport des Wassers nicht wie üblich durch eine Hydrophobierung der Poren sondern dadurch unterbindet, daß man paradoxerweise die Wände des Porensystems benetzt und anfeuchtet.

Maßgebend für den durch Kapillarkräfte bedingten Transport von Flüssigkeiten in einem Poren- und Kapillarsystem ist nicht nur der Unterschied in der Oberflächenspannung zwischen dem Wasser und der Porenwand, ausgedrückt durch den sogenannten Randwinkel, sondern auch die Oberflächenspannung der Flüssigkeit. Die Oberflächenspannung von Wasser beträgt nun ungefähr 75 Dyn/cm. Indem man nun gemäß den erfindungsgemäßen Verfahren Tenside einsetzt, kann man diese Oberflächenspannung verringern, so daß die Länge bzw. Höhe des Kapillartransportes des Wassers sehr stark reduziert wird (bis auf ein Drittel der ursprünglichen Höhe). Die Flüssigkeiten und die darin gelösten Salze können dann nicht mehr bis zur Verdunstungsfläche gelangen, so daß weitere Schäden vermieden werden.

Die entsprechenden Tenside plaziert man entweder am Anfang oder in der Mitte oder auch am Ende des Transportweges. Dies kann auf verschiedene Weise geschehen. So kann man die Tenside beispielsweise auf den Boden aufbringen, bevor man das Fundament errichtet. Man kann die Tenside aber auch in das bereits geschädigte Fundament oder Mauerwerk injizieren, beispielsweise indem man Rohre entweder in den Boden des Fundamentes oder von außen in das Fundament einbringt und über diese Rohre die entsprechenden Tenside injiziert.

Der folgende Versuch zeigt, wie durch den erfindungsgemäßen Einsatz von Tensiden die Länge bzw. Höhe des Kapillartransportes von Wasser sehr stark reduziert wird.

Zwei Stäbe aus Leichtbeton mit einem Volumengewicht von 0,5 t/m³ und den Maßen 30 x 30 x 100 mm wurden stehend plaziert, und zwar

Stab 1 in gewöhnliches Leitungswasser mit einer Oberflächenspannung von etwa 70 Dyn/cm und

Stab 2 in Leitungswasser mit einem Tensidzusatz mit einer berechneten Oberflächenspannung von etwa 45 Dyn/cm.

Nach einem Tag ist das Wasser gestiegen in Stab 1 um 60 mm und Stab 2 um 10 mm.

Somit ist das Wasser in dem Stab, der nach dem erfindungsgemäßen Verfahren mit einem Tensid behandelt worden ist, wesentlich weniger hochgestiegen als in dem unbehandelten Stab. Zudem hat der erfindungsgemäß behandelte Stab eine markierte obere Feuchtigkeitsgrenze, während die Feuchtigkeitsgrenze im unbehandelten Stab fließend ist.

Wie bereits oben ausgeführt, beruht die Schädlichkeit der wasserlöslichen Salze auf deren Eigenschaft, bei Änderungen der Luftfeuchtigkeit ihre Struktur zu ändern und durch Wanderungen auf dem Substrat die mit diesen Salzen bedeckte Fläche des Substrats zu vergrößern. Diese Wanderung kann man durch einfache Versuche veranschaulichen, wenn man "Salzstrukturen" aus Lösungen heraus auf glatten Glasflächen wandern bzw. steigen läßt. Die Wanderungs- bzw. Steiggeschwindigkeit ist ein Maß für die "Agressivität".

Bei Versuchen, die bei einer Temperatur von etwa 20°C und einer relativen Luftfeuchtigkeit von ca. 60 % durchgeführt wurden, stieg Natriumsulfatdecahydrat, das zu einem Sättigungsfeuchtigkeitsgehalt von 93 % r.L. führt, um 45 mm, während eine Mischung aus Natriumsulfatdecahydrat und Kaliumnitrit (Sättigungsfeuchtigkeitsgehalt von Kaliumnitrit = 45 % r.L.) um Null Millimeter stieg. Durch Zusatz von Kaliumnitrit zu Natriumsulfat konnte die bekannte Agressivität des Natriumsulfats vermindert werden.

Es konnte ferner gezeigt werden, daß die durch Tausalze bzw. Streusalze (Natriumchlorid, Natriumsulfat, Natriumcarbonat) hervorgerufenen Ausblühungen in Gewölben von Baudenkmälern wirksam nach dem erfindungsgemäßen Verfahren behandelt werden konnten.

Dazu wurde die Oberflächenschicht mit einem erfindungsgemäßen Mittel bzw. nach dem erfindungsgemäßen Verfahren behandelt. Es wurden dazu sowohl Tenside (Tween 20) als auch organische Salze (Kaliumacetat in Alkohol) oder anorganische Salze (z.B. Kaliumnitrit) in Wasser eingesetzt. Nach der Behandlung verschwanden die sogenannten Tausalzausblühungen.

Die Verhinderung von Frostschäden nach dem erfindungsgemäßen Verfahren wurde anhand folgenden Versuches demonstriert.

Die Frostbeständigkeit von Beton gegenüber Schäden, die durch Tausalz hervorgerufen werden, wurde nach einem international genormten Test durchgeführt. Dazu wurde Beton mit einer 3-4 %igen NaCl-Lösung behandelt. Die Temperatur wurde mehrmals unter den Gefrierpunkt erniedrigt und dann wieder erhöht, wobei die dabei auftretenden Schäden beobachtet wurden. Durch Zusatz von Zucker oder wasserlöslichen Netzmitteln zur Prüflösung wurde die Beständigkeit des untersuchten Betons (K 300) gegenüber derartigen Temperaturänderungen wesentlich erhöht, denn es waren 50 % mehr Zyclen (Temperaturwechsel) nötig, um den Beton zu zerstören.

**Patentansprüche**

1. Verfahren zur Verhinderung von Salzwanderungsprozessen und von durch Salze mitverursachten Sprengungs- und Zerstörungsprozessen bei Bauwerken oder Kulturdenkmälern, dadurch gekennzeichnet, daß man die Bauwerke oder Kulturdenkmäler mit einer wasserlöslichen Verbindung behandelt, die zu einem Sättigungsfeuchtigkeitsgehalt der Luft über einer mit dieser Verbindung gesättigten, wäßrigen Lösung führt, welcher sich von dem Sättigungsfeuchtigkeitsgehalt in der Luft über einer mit dem schädlichen Salz gesättigten, wäßrigen Lösung um 5 - 60 %-Punkte relative Luftfeuchtigkeit, gemessen bei 20°C, unterscheidet und/oder

mit einer grenzflächenaktiven wasserlöslichen Verbindung behandelt, welche die Oberflächenspannung von Wasser oder wäßrigen Salzlösungen senkt oder die Grenzflächenspannung von Wasser oder wäßrigen Salzlösungen erhöht.

2. Verfahren nach Anspruch 1, dadurch gekennzeichnet, daß man eine Verbindung verwendet, die zu einem Sättigungsfeuchtigkeitsgehalt zwischen 20 und 90 % relative Luftfeuchtigkeit (r.L.) führt.

3. Verfahren nach Anspruch 1, dadurch gekennzeichnet, daß man eine grenzflächenaktive Verbindung einsetzt, die hydrophob ist und die Grenzflächenspannung von Wasser oder einer wäßrigen Salzlösung so erhöht, daß deren Randwinkel auf einem benetzbaren Substrat mehr als 90° beträgt.

4. Verfahren nach Anspruch 1, dadurch gekennzeichnet, daß man ein Tensid einsetzt.

5. Verfahren nach einem der vorhergehenden Ansprüche, dadurch gekennzeichnet, daß man die äußere oder innere Oberfläche der Bauwerke oder Kulturdenkmäler behandelt.

6. Verfahren nach Anspruch 4, dadurch gekennzeichnet, daß man das Tensid in die Bausubstanz von Bauwerken oder Kulturdenkmälern einbringt.

7. Verfahren nach einem der vorhergehenden Ansprüche, dadurch gekennzeichnet, daß man die verwendete Verbindung in fester oder flüssiger Form, als viskoses Konzentrat, als Lösung, Emulsion, Suspension oder Aerosol einsetzt.

8. Verwendung eines anorganischen Salzes, das über einer wäßrigen, gesättigten Lösung dieses Salzes einen Sättigungsfeuchtigkeitsgehalt bei 20° C von 20-90° relative Luftfeuchtigkeit hervorruft,
    oder
    eines wasserlöslichen Salzes von organischen Säuren, insbesondere Alkali- oder Erdalkalimetallsalz von Ameisensäure, Essigsäure, Propionsäure, Buttersäure, Zitronensäure, Valeriansäure, höheren Fettsäuren mit 6 oder mehr Kohlenstoffatomen,
    oder
    von wasserlöslichen einfachen Zucker, wie Monosaccharide und Disaccharide (beispielsweise Saccharose, Maltose, Cellobiose und Lactose), Hexosen, Pentosen, Glukose und deren Stereoisomere, wie Manose, Fructose, Arabinose, Xylose, Ribose und Galactose,
    oder
    von Cellulose und Stärke,
    oder
    eines Tensides aus der Gruppe:
    sulfonierte und sulfurierte Ester, Amine und Polyäther, sulfonierte und sulfurierte Fette, Öle und Fettsäuren, Reaktionsprodukte von Fettsäuren mit binären, tertiären und quaternären organischen Aminen und Seifen, Alkohol-Alkylenoxidaddukte, Ester und Äther, beispielsweise Sorbitanfettsäureester, Polyoxyethylensorbitanfettsäureester,

Polyoxyethylenfettsäureester und Polyoxyethylenfettalkoholäther, Polyoxyethylenaddukte, Alkylphenolethylenoxidaddukte, Fettsäureethylenoxidaddukte, Alkylglycerylethylenoxidaddukte, Fettalkoholetoxilate, alkoxylierte Alkylphenole und dgl., beispielsweise Polyoxyethylenstearat, Sorbitanmonooleat, Sorbitanmonopalmitat, Sorbitanmonostearat, Sorbitantristearat, Sorbitanmonooleat, Sorbitantrioleat, Polyoxyethoxysorbitanmonooleat, -monopalmitat, -monostearat, -tristearat, -trioleat,
    oder eines
    Polyphosphat, beispielsweise Natriumtripolyphosphat,
    oder
    einer Mischung aus mindestens zwei Verbindungen der oben genannten Art alleine oder in einem Verdünnungsmittel zur Verhinderung und Reduzierung von Salzwanderungsprozessen und von durch Salze mitverursachten Sprengungs- und Zerstörungsprozessen an Bauwerken oder Kulturdenkmälern.

## Claims

1. Process for preventing salt migration and bursting and disintegration mechanisms being partially caused by salts on buildings or historic monuments, characterized in that the buildings or historic monuments are treated with a water-soluble compound leading to a saturation moisture content of the atmosphere over an aqueous solution saturated with this compound, said saturation moisture content differing from the saturation moisture content in the atmosphere over an aqueous solution saturated with the destructive salt by 5 to 60 % points of relative humidity of air measured at 20° C,
    and/or
    are treated with a surface active water-soluble compound which decreases the surface tension of water or aqueous salt solutions or increases the interfacial tension of water or aqueous salt solutions.

2. Process according to claim 1 characterized in that a compound is used which leads to a saturation moisture content from 20 to 90 % relative humidity of air.

3. Process according to claim 1, characterized in that a surface active compound is used which is hydrophobic and which increases the interfacial tension of water or an aqueous salt solution to such an extent that its boundary angle on a moistenable substrate amounts to more than 90°.

4. Process according to claim 1, characterized in that a tenside is used.

5. Process according to anyone of the preceding claims, characterized in that the outer or inner surface of the buildings or historic monuments are treated.

6. Process according to claim 4, characterized in that the tenside is introduced into the building material of buildings or historic monuments.

7. Process according to anyone of the preceding claims, characterized in that the compound is used in solid or liquid form, as a viscous concentrate, as a solution, emulsion, suspension or aerosol.

8. Use of an anorganic salt which leads to a saturation moisture content of 20 to 90% relative humidity of air at 20°C over an aqueous saturated solution of said salt, or

of a water-soluble salt of organic acids, in particular alkali metal salt or alkaline earth metal salts of formic acid, acetic acid, propionic acid, butyric acid, citric acid, valeric acid, or higher fatty acids having 6 or more carbon atoms, or of water-soluble ordinary sugars, such as monosaccharides and disaccharides (for example saccharose, maltose, cellobiose and lactose), hexoses, pentoses, glucose, and stereoisomeres thereof, such as manose, fructose, arabinose, xylose, ribose and Galactose, or

of cellulose and starch, or

of a tenside selected from the group consisting of: sulfonated and sulfurated esters, amines and polyethers, sulfonated and sulfurated fats, oils and fatty acids, reaction products of fatty acids with binary, tertiary and quaternary organic amines and soaps, alcohol/alkylenoxide adducts, esters and ethers, for example sorbitan fatty acid ester, polyoxyethylensorbitan fatty acid ester, polyoxyethylen fatty acid ester and polyoxyethylen fat alcohol ether, polyoxyethylen adducts, alkylphenolethylenoxide adducts, fatty acid ethylenoxide adducts, alkylglyceryl ethylenoxide adducts, fat alcohol etoxilates, alkoxylated alkylphenoles, and the like, such as polyoxyethylen stearate, sorbitanemonooleate, sorbitanemonopalmitate, sorbitanmonostearate, sorbitantristearate, sorbitanmonooleate, sorbitantrioleate, polyoxyethoxysorbitanmonooleate, -monopalmitate, -monostearate, -tristearate, -trioleate, or

of a polyphosphate, such as sodiumtripolyphosphate, or

of a mixture of at least two compounds as indicated above without or with a diluent,

for preventing and reducing salt migration and bursting and disintegration mechanisms being partially caused by salts on buildings or historic monuments.

## Revendications

1. Procédé pour empêcher des processus de migration de sels et des processus d'éclatement et de destruction provoqués par des sels dans des constructions ou des monuments historiques, caractérisé en ce que les constructions ou monuments historiques sont traités avec un composé soluble dans l'eau qui conduit à une humidité de l'air de saturation au-dessus d'une solution aqueuse saturée avec ce composé, laquelle humidité de l'air de saturation diffère de 5 à 60 points de % d'humidité relative de l'air, mesurée à 20°C, de celle au-dessus d'une solution aqueuse saturée du sel nocif, et/ou avec un composé tensio-actif soluble dans l'eau qui abaisse la tension superficielle de l'eau ou des solutions aqueuses de sel ou qui augmente la tension interfaciale de l'eau ou des solutions salines aqueuses.

2. Procédé selon la revendication 1, caractérisé en ce que le composé utilisé conduit à une humidité de l'air de saturation comprise entre 20 et 90 % d'humidité relative de l'air (h.r.)

3. Procédé selon la revendication 1, caractérisé en ce qu'il met en oeuvre un composé tensio-actif hydrophobe qui augmente la tension interfaciale de l'eau ou d'une solution saline aqueuse de telle façon que son angle de mouillage sur un substrat mouillable est supérieur à 90°.

4. Procédé selon la revendication 1, caractérisé en ce qu'il met en oeuvre un dérivé tensio-actif.

5. Procédé selon l'une quelconque des revendications précédentes, caractérisé en ce que le traitement est appliqué à la surface extérieure ou intérieure des constructions ou monuments historiques.

6. Procédé selon la revendication 4, caractérisé en ce que le dérivé tensio-actif est introduit dans les volumes bâtis des constructions ou monuments historiques.

7. Procédé selon l'une quelconque des revendications 1 à 6, caractérisé en ce que le composé utilisé est mis en oeuvre sous une forme solide ou liquide, en tant que concentré visqueux, sous forme de solution, émulsion, suspension ou aérosol.

8. Utilisation d'un sel inorganique qui, au-dessus d'une solution saturée de ce sel provoque, à 20°C, une humidité de l'air de saturation de 20 à 90 % d'humidité relative de l'air,

ou

d'un sel soluble dans l'eau d'acides organiques, en particulier un sel de métal alcalin ou alcalino-terreux de l'acide formique, de l'acide acétique, de l'acide propionique, de l'acide butyrique, de l'acide citrique, dé l'acide valérique, des acides gras supérieurs avec 6 atomes de carbone ou plus

ou

de sucres simples solubles dans l'eau tels que des monosaccharides et disaccharides (par exemple saccharose, maltose, cellobiose et lactose), des hexoses, pentoses, glucoses et leurs stéréoisomères tels que le mannose le fructose, l'arabinose, le xylose, le ribose et le galactose,

ou

de cellulose et d'amidon,

ou

d'un dérivé tensio-actif appartenant au groupe:

des esters sulfonés et sulfurylés, amines et polyéthers, graisses sulfonées et sulfurylées, huiles et acides gras, produits réactionnels des acides gras avec des amines organiques binaires, tertiaires et quaternaires et des savons produits d'addition alcool-oxyde d'alkylène, esters et éthers, par exemple esters d'acide gras et de sorbitan, esters d'acide gras et de sorbitan polyoxyéthylénés, esters d'acides gras polyéthylénés, et éthers d'alcools gras polyoxyéthylénés, produits d'addition de polyoxyéthylène, produits d'addition d'oxyde d'éthylène et d'alkyl-phénols, produits d'addition d'oxyde d'éthylène et d'acides gras, produits d'addition d'oxyde d'éthylène et d'alkylglycéryle, éthoxylates d'alcools gras, alkylphénols alcoxylés et composés analogues, par exemple stéarate de polyoxyéthylène, monooléate de sorbitan, monopalmitate de sorbitan, monostéarate de sorbitan, tristéarate de sorbitan, mono-oléate de sorbitan trioléate de sorbitan, monooléate, monostéarate, tristéarate, trioléate de polyoxy-éthoxysorbitan.

ou

d'un polyphosphate, par exemple tripolyphosphate de sodium,

ou

d'un mélange d'au moins deux composés du type précité, seuls ou dans un diluant, pour empêcher et pour réduire des processus de migration de sels et des processus d'éclatement et de destruction sur des constructions ou monuments historiques provoqués par des sels.
et éthers d'alcools gras polyoxyéthylénés, produits d'addition de polyoxyéthylène, produits d'addition d'oxyde d'éthylène et d'alkyl-phénols, produits d'addition d'oxyde d'éthylène et d'acides gras, produits d'addition d'oxyde d'éthylène et d'alkylglycéryle, éthoxylates d'alcools gras, alkylphénols alcoxylés et composés analogues, par exemple stéarate de polyoxyéthylène, monooléate de sorbitan, monopalmitate de sorbitan, monostéarate de sorbitan, tristéarate de sorbitan, mono-oléate de sorbitan trioléate de sorbitan, monooléate, monostéarate, tristéarate, trioléate de polyoxy-éthoxysorbitan.

ou

d'un polyphosphate, par exemple tripolyphosphate de sodium,

ou

d'un mélange d'au moins deux composés du type précité, seuls ou dans un diluant, pour empêcher et pour réduire des processus de migration de sels et des processus d'éclatement et de destruction sur des constructions ou monuments historiques provoqués par des sels.